# EUROPEAN PATENT SPECIFICATION

(11) **EP 1 095 857 B1**
(45) Date of publication and mention of the grant of the patent: **13.08.2003**
(21) Application number: 99916936.0
(22) Date of filing: 06.05.1999
(51) Int. Cl.: B65B 11/14, B65D 75/10, A23G 7/00

(54) **METHOD AND DEVICE FOR PLACING THE WRAPPERS OF LOLLIPOPS**
VERFAHREN UND EINRICHTUNG ZUM EINWICKELN VON KARAMELLEN
PROCEDE ET DISPOSITIF PERMETTANT DE PLACER L'EMBALLAGE DES SUCETTES

(43) Date of publication of application: 02.05.2001
(73) Proprietor: Carugil, S.L., 30100 Espinardo, Murcia (ES)
(72) Inventor: Hernandez Vicente, Francisco, E-30100 Espinardo (ES); Rubio Gil, Carlos, E-30100 Espinardo (ES)
(74) Representative: Esteban Perez-Serrano, Maria Isabel
(86) International application number: ES9900124
(87) International publication number: WO00068083

(56) References cited:
- EP-A- 0 018 701
- EP-A- 0 036 282
- EP-A- 0 073 535
- DE-C- 630 305
- GB-A- 328 145
- GB-A- 831 135
- GB-A- 2 277 511
- US-A- 2 744 370
- US-A- 5 519 981

## Description

### OBJECT OF THE INVENTION

The object of the present invention is a method and device for placing a wrapper on stick candy and its direct feeding, specifically relating to the manner in which this method takes place of placing the stick candy wrapper and the device required for executing said method.

The invention therefore lies within the field of machinery used in manufacture and preparation of stick candy with an outer wrapper.

### BACKGROUND OF THE INVENTION

Hitherto, automated devices and methods for placing a wrapper on stick candy consisted of feeding the wrapper continuously and cutting it and placing it on the lollipop head. During the cutting process, and due to its manner, the paper feed is stopped as the blade interferes with the advance of the paper; otherwise, a jam would occur if the paper did not stop. As the cut segment is separated from the rest of the paper, it is not held by anything and therefore requires an auxiliary piece or clip for holding said paper. As the lollipop moves forward, as well as the pusher, the wrapping paper is held between the candy and the pusher, so that the V-shaped clip used previously must be separated from the wrapper, in order to wrap the paper around the lollipop head. Finally, the paper wrapped around the stick is sealed.

The method described above has several disadvantages, such as the interference of the blade in the advance of the paper, which results in constant stoppages of the paper feed, with the ensuing time wasted and poorer performance of the machine. In addition, as the cut paper is separated from the rest a V-shaped clip is required which must pass from an open to a closed position in which it holds the paper, arid then again to an open position, releasing the paper.

Furthermore, in conventional systems the paper is not fed directly to the plate but via an intermediate disc, implying an adjustment of the system each time the stick diameter changes, with the ensuing time wasted and losses in time and product during fine adjustments at the head and end of manufacture.

It is Known in the State of the Art the wrapping machine disclosed in the US 5519981 patent where is described a twist-wrapping machine comprising an aligner for aligning candies in compartments of a rotary disk, a takeout means having pushup member adapted to pass through the compartments and take out the candy. It also comprises fork means for gripping the candy and accompanying wrapping paper and a twister which twist the open ends of the wrapping paper.

Such machine doesn't allow to wrap lollipops, as it can not handle stick candies. Now the object of the present invention is to develop a machine and particularly the necessary means for wrapping lollipops.

Document EP-A-0 036 281 discloses a wrapping device having all the features of the preamble of claim 2, but in the case of document EP-A-0 036 281 the wrapping paper needs to he folded at two ends.

The method and device for placing a wrapper on stick candy is meant to overcome the aforementioned problems so that the wrapping paper does not have to stop advancing, the use of a clip or auxiliary element for holding the paper after it is cut is not required and the wrapping paper is folded only at one end.

### DESCRIPTION OF THE INVENTION

The invention disclosed for a method and device for placing the wrapper of a stick candy consists of a method in which the paper advances by means of positioning rollers between which runs the stick candy wrapping paper, an din which the paper passes in front of a revolving blade with a blade on its perimeter, so that with each turn the blade falls on the paper and cuts it. The speed of rotation of the blade is set so that the length of paper cut is that required to wrap the candy. As the paper advances, the candy head and a pusher are advanced on the paper, so that when the wrapping paper segment is cut it is held between the two, and no auxiliary element or holding means whatsoever is required. After the paper is held between the lollipop head and the pusher, the pusher revolves and retracts causing the paper to wrap around the lollipop head, while a clip acts on the base of the head allowing to group and seal the paper on the base of the candy.

Lastly, the continuous feeding of stick candy to the plate is performed directly, that is, without an intermediate disc as in conventional systems, by making them travel along parallel input and output loops.

### DESCRIPTION OF THE DRAWINGS

These and further characteristics of the invention will become clear in view of the accompanying drawings of a practical embodiment, where for purposes of illustration only the main characteristics of the invention are shown.

Figure 1 shows a schematic representation of the basis of the method and device for placing a wrapper on stick candy.

Figure 2 shows the final process of placing the wrapper on the stick candy.

Figure 3 shows the direct feeding means of the stick candy to the plate where the candy is wrapped.

### PREFERRED EMBODIMENT OF THE INVENTION

In view of the figures, a preferred embodiment is described of the method and device for placing a wrapper on stick candy.

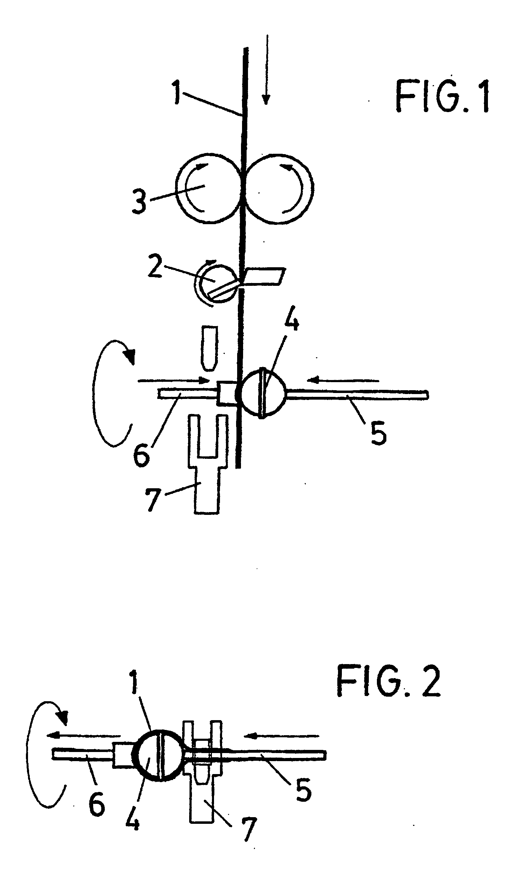

Figure 1 shows the wrapping paper (1) advancing continuously by means of two rollers (3) placed on either side of paper (1). The paper passes next to a roller provided on its perimeter with a blade (2), which blade due to the rotation of the roller on which it is placed cuts paper (1) without requiring the latter to stop.

While the paper (1) is being cut, the lollipop advances on paper (1), as well as pusher (6), so that once it is cut paper (1) is held between the lollipop head (4) and pusher (6), at which time the pusher (3) begins to turn, bringing about the wrapping of lollipop head (4). Figure 2 shows how the lollipop is pushed by its stick (5) until it is placed beneath clip (7), which will close the wrapping paper around the area of stick (5) next to the base of head (4). At this time wrapping paper (1) is sealed onto stick (5) of the candy.

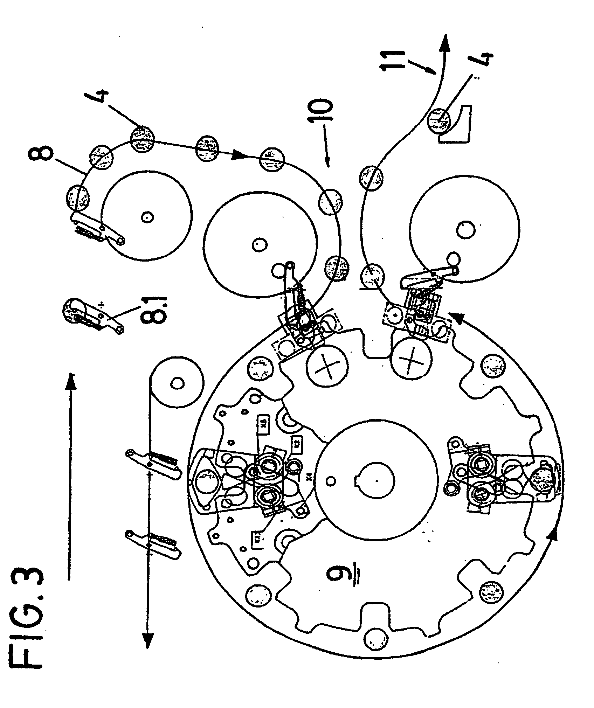

Figure 3 shows a top view of the means (8.1) for direct extraction and feeding of stick candy, by means of chain (8), with said carrying means (8.1) returning on the plane immediately below, next to plate (9) provided with holding clips (7), so that the stick candies follow along the path of the chain corresponding input (10) and output (11) loops which eliminate the need for a disc before plate (9).

## Claims

1. Method for placing a wrapper on a stick candy (4,5) from those methods which proceed to cut the wrapping paper (1) using a revolving blade (2), comprising the following steps:
- advancing the stick candy which is pushed by its stick.
- holding the cut paper (1) between a pusher (6) and the stick candy head (4), the pusher (6) pushing on the wrapping paper opposite the candy stick (5),
- pushing the stick candy by its stick (5) until the part of the stick next to head (4) is beneath a clip (7).
- closing the cut paper which is around the area of stick (5) next to the base of the head (4) by means of the clip (7).
- at the same time as the previous action, turning the pusher (6) wrapping the candy head (4), with the cut paper (1).

2. Device for placing a wrapper on a stick candy having two rollers (3) between which the wrapping paper advances, a revolving blade (2) for cutting the wrapping paper, comprising a pusher (6) which in a first stage holds the cut paper between said pusher (6) and the head of the stick candy, and a clip (7), **characterized in that** the pusher (6) is adapted to push on the wrapping paper opposite the candy stick (5), and the clip (7) is adapted for retaining the wrapping paper around the stick next to the head of the candy at the same time that the pusher (6) turns wrapping the candy.

## Patentansprüche

1. Verfahren, um ein Einwickelpapier an einem Bonbon am Stiel (4, 5) anzubringen, durch die Art Verfahren, bei denen das Einwickelpapier (1) mit Hilfe einer rotierenden Klinge (2) zugeschnitten wird, und das folgende Stufen aufweist:
- Vorschub des Bonbons am Stiel, das am Stiel geschoben wird,
- Festhalten des abgeschnittenen Papiers (1) zwischen einer Schiebervorrichtung (6) und dem Kopf (4) des Bonbons am Stiel, wobei die Schiebevorrichtung (6) das auf der dem Stiel (1) des Bonbons gegenüberliegenden Seite liegende Einwickelpapier schiebt,
- Schieben des Bonbons am Stiel an seinem Stiel (5), bis der Teil des Stiels, der in der Nähe des Kopfs (4) liegt, neben einer Klammer (7) zu liegen kommt,
- Verschliessen des abgeschnittenen Papiers, das den in der Nähe der Unterseite des Kopfs (4) liegenden Bereich des Stiels (5) mit Hilfe einer Klammer (7) umhüllt,
- gleichzeitig mit dem vorgenannten Vorgang, wird die Schiebevorrichtung (6) gedreht und wickelt so den Kopf (4) des Bonbons mit dem abgeschnittenen Papier (1) ein.

2. Vorrichtung, um ein Einwickelpapier an einem Bonbon am Stiel anzubringen, die zwei Rollen (3) aufweist, zwischen denen das Einwickelpapier vorgeschoben wird, eine rotierende Klinge (2), um das Einwickelpapier abzuschneiden, wobei sie weiterhin eine Schiebevorrichtung (6) aufweist, die das abgeschnittene Papier in einer ersten Stufe zwischen der genannten Schiebevorrichtung (6) und dem Kopf des Bonbons am Stiel festhält, und eine Klammer (7), **dadurch gekennzeichnet, dass** die Schiebevorrichtung (6) so ausgelegt ist, dass sie das Einwickelpapier in die dem Stiel (5) des Bonbons entgegengesetzte Richtung schiebt und dass die Klammer (7) so ausgelegt ist, dass sie das Einwickelpapier in der Nähe des Kopfs des Bonbons um den Stiel gewickelt festhält, während die Schiebevorrichtung (6) sich gleichzeitig dreht und das Bonbon einwickelt.

## Revendications

1. Procédé de mise en place d'une enveloppe sur une sucette (4, 5) par des procédés qui consistent à découper le papier de l'enveloppe (1) en utilisant une lame (2) tournante, et comprenant les étapes suivantes :
- avance de la sucette, qui est poussée par le bâtonnet,
- retenue du papier découpé (1) entre un poussoir (6) et la tête (4) de la sucette, le poussoir (6) servant à pousser le papier de l'enveloppe opposée au bâtonnet de la sucette (1),
- la sucette est poussée par ledit bâtonnet (5) jusqu'à ce que la partie de celui-ci proche de la tête (4) se trouve en regard d'un collier (7).
- fermeture du papier découpé se trouvant autour de la zone du bâtonnet (5) proche de la base de la tête (4) à l'aide du collier (7).
- en même temps que l'action précédente, le poussoir (6) tourne, pour envelopper la tête (4) de la sucette avec le papier découpé (1).

2. Dispositif de mise en place d'une enveloppe sur une sucette, muni de deux rouleaux (3) entre lesquels avance le papier de l'enveloppe, d'une lame tournante (2) servant à découper le papier de l'enveloppe, d'un poussoir (6) qui dans un premier temps retient le papier découpé entre ledit poussoir (6) et la tête de la sucette, et d'un collier (7), **caractérisé en ce que** le poussoir (6) est conçu pour pousser le papier de l'enveloppe opposé au bâtonnet (5) de la sucette, et **en ce que** le collier (7) est conçu pour retenir le papier de l'enveloppe autour du bâtonnet, près de la tête de la sucette, en même temps que le poussoir (6) tourne pour envelopper la sucette.
